# NEUE EUROPÄISCHE PATENTSCHRIFT

(11) **EP 2 092 177 B2**
(45) Veröffentlichungstag und Bekanntmachung des Hinweises auf die Entscheidung über den Einspruch: **01.07.2020**
(45) Hinweis auf die Patenterteilung: 28.03.2012
(21) Anmeldenummer: 08803818.7
(22) Anmeldetag: 08.09.2008
(51) Int. Cl.: F02B 63/04, H02K 7/18

(54) **SCHWIMMFÄHIGE HAFENSTROMVERSORGUNG**
BUOYANT HARBOR POWER SUPPLY
ALIMENTATION FLOTTANTE EN COURANT ÉLECTRIQUE DE PORT

(30) Priorität: 02.11.2007 DE 102007052882; 04.07.2008 DE 102008031698
(43) Veröffentlichungstag der Anmeldung: 26.08.2009
(60) Teilanmeldung: 11009031.3
(73) Patentinhaber: Siemens Aktiengesellschaft, 80333 München (DE)
(72) Erfinder: KRACKHARDT, Ernst-Christoph, 22869 Schenefeld (DE); MÜLLER-SCHWENN, Hans Bernhard, 22529 Hamburg (DE)
(86) Internationale Anmeldenummer: PCT/EP2008/061849
(87) Internationale Veröffentlichungsnummer: WO 2009/056380

(56) Entgegenhaltungen:
- CH-A- 531 127
- DE-A1- 10 231 152
- DE-A1- 10 336 792
- DE-U1-202004 006 532
- GB-A- 1 139 499
- GB-A- 1 533 083
- JP-A- H0 331 098
- JP-A- S6 116 186
- JP-A- S61 135 313
- JP-A- 2003 252 294
- JP-A- 2006 502 049
- JP-A- 2007 513 759
- JP-A- 2008 178 228
- JP-B- 40 344 816
- JP-B2- H 026 990
- JP-B2- 4 352 428
- JP-B2- 4 587 305
- JP-B2- 4 722 718
- JP-B2- 4 731 969
- JP-U- 3 126 684
- US-A- 3 602 730
- US-A- 5 920 467
- US-A1- 2006 053 791
- US-A1- 2006 254 281
- US-A1- 2006 283 802
- US-B1- 6 329 725
- US-B2- 7 119 460
- US-B2- 7 122 913
- US-B2- 7 253 538
- US-B2- 7 287 389

## Beschreibung

Die Erfindung betrifft ein Verfahren zur Versorgung eines Schiffes in einem Hafen mit externer Energie durch eine schwimmfähige Hafenstromversorgung für Schiffe gemäß Patentanspruch 1.

In den Häfen der Welt wird zunehmend Wert auf verringerte Emissionen gelegt. Dies gilt auch für die Schifffahrt. Heutzutage ist es üblich, dass Schiffe ihren Strombedarf im Hafen mit Hilfe ihres eigenen Stromerzeugungsaggregates, in der Regel ein oder mehrere Dieselgenerator(en), erzeugen. Da diese Maschinen für die Verbrennung von schwerem Dieselöl, also HFO, optimiert wurden und zum Teil auch im Hafen Marine Diesel Oil, also MDO verbrennen, erzeugen diese Dieselgeneratoren nicht zu unterschätzende Mengen an Russ, NOₓ, CO₂ und SOₓ.

Um dieser Russ-, NOₓ-, CO₂- und SOₓ-Bildung vorzubeugen, wird aufgrund von EU-Richtlinien 1999/32/EG und 93/12/EG diskutiert, die Schiffe im Hafen mit externer Energie zu versorgen. Hierzu ist es bereits bekannt, Schiffe von der Kaianlage aus mit Strom zu versorgen (häufig auch als "Cold Ironing" bezeichnet).

So ist zum Beispiel aus der US 7,122,913 B2 eine modulare Hafenstromversorgung für im Hafen liegende Schiffe bekannt, die auf dem Kai entlang verfahrbar ist.

Ein Problem bei einer derartigen Stromversorgung vom Kai ist, dass bei der Stromversorgung eines in Hafen liegenden Schiffes Unterschiede des Wasserstandes und des Belandungsstandes des Schiffes im Hafen ausgeglichen werden müssen. Zudem kann die Einsatzbereitschaft einer derartigen Hafenstromversorgung vom Kai, beispielsweise bei Hochwasser, beeinträchtigt sein. Die US 2006/254281 A1 offenbart eine auf einer Barge anordenbare mobile Gasturbinen-/Generatoranordnung zur Stromversorgung für entfernte Gegenden. Da hiermit Strom für Verbraucher an Land erzeugt wird, die bei Vorhandensein eines landseitigen Netzes mit Strom definierter Spannung und Frequenz aus dem landseitigen Netz gespeist werden, muss von der Gasturbinen-/Generatoranordnung auch nur Strom mit genau dieser einen definierten Spannung und Frequenz erzeugt werden. Eine Stromversorgung für im Hafen liegende Schiffe ist dabei nicht vorgesehen und wäre aufgrund der unterschiedlichen Spannung, Frequenz und Phasenlage der Bordnetze und Verbraucher der Schiffe auch nicht möglich.

Aus der JP 03031098 A ist ein Verfahren zur Lieferung von elektrischer Leistung für ein Schiff bekannt, bei dem die elektrische Leistung, die beim Einfahren des Schiffs in einen Hafen und beim Verlassen des Hafens nötig ist und die erforderliche elektrische Leistung während der Fahrt des Schiffs übersteigt, durch ein spezielles Stromerzeugungsschiff geliefert wird.

Es ist deshalb eine Aufgabe der vorliegenden Erfindung, ein Verfahren zur Versorgung eines Schiffes in einem Hafen mit externer Energie durch eine schwimmfähige Hafenstromversorgung für Schiffe anzugeben, mit der die vorgenannten Probleme im Wesentlichen vermieden werden können.

Die Lösung dieser Aufgabe gelingt durch ein Verfahren zur Versorgung eines in einem Hafen liegenden Schiffes mit externer Energie durch eine schwimmfähige Hafenstromversorgung für Schiffe nach Anspruch 1. Auf oder in einer schwimmfähigen Einrichtung, insbesondere einer Barge, sind sämtliche Komponenten der schwimmfähigen (bzw. schwimmbaren) Hafenstromversorgung , angeordnet.

Vorteilhafte Weiterbildungen des erfindungsgemäßen Verfahrens sind Gegenstand der Patentansprüche 2 bis 7.

Eine schwimmende Hafenstromversorgung kann sich mit dem Wasserstand wie ein im Hafen liegendes Schiff bewegen, so dass Unterschiede im Wasserstand nicht zu kompensieren sind. Lediglich Unterschiede im Beladungszustand eines Schiffes sind zu kompensieren. Die Einsatzfähigkeit der Hafenstromversorgung ist zudem auch bei Hochwasser gewährleistet. Eine schwimmfähige Hafenstromversorgung, insbesondere wenn sie als eine Barge ausgebildet ist, kann auch leicht versetzt werden und - zum Beispiel in einem Katastrophenfall - auch zur Stromeinspeisung in an Land befindliche Netze von Energieversorgungsunternehmen genutzt werden.

Ein weiterer Vorteil liegt darin, dass Energieversorger (E-VUs) keine Leistungen für den Bordanschluss vorhalten müssen (teure, nicht ständig genutzte Leitungen). Weiterhin können die Investitionen für eine derartige schwimmfähige Hafenstromversorgung geringer sein als für eine Stromversorgung von Land, da diese sturmflutsicher am Kai anzuordnen ist. Für jede von der schwimmfähige Hafenstromversorgung abgegebene kWh könnte beispielsweise ein Preis generiert werden, dessen Erlös zu 20% an den Hafenbetreiber, zu 2% an das EVU (im Wechsel zu Strombezug von Land) und zu 60% an den Finanzierer der schwimmfähigen Hafenstromversorgung geht.

Zu den Komponenten der Hafenstromversorgung an Bord der schwimmfähigen Einrichtung zählen zum Beispiel Generatoren, Transformatoren, Stromrichter, Kabel, Kabeltrommeln, Regelgeräte und Steckverbinder. Bevorzugt ist die schwimmfähige Hafenstromversorgung in der Lage, Strom bei einer Spannung/Frequenz von 6.6 kV/60 Hz, 440V/60 Hz und 380V/50 Hz zu liefern.

Bei dem erfindungsgemäßen Verfahren umfasst die Hafenstromversorgung zur Stromerzeugung eine Verbrennungskraftmaschine und einen von der Verbrennungskraftmaschine angetriebenen Generator. Beispielsweise können hochmoderne Motorgeneratorsätze mit einer Leistung von 2 - 5 MW zum Einsatz kommen.

Bevorzugt wird die Verbrennungskraftmaschine mit schwefelarmen Brennstoffen, Biokraftstoffen oder mit Erdgasen betrieben. Im Fall von Dieselkraftstoff kommt von Vorteil Dieselkraftstoff mit maximal 0.1 % Schwefelgehalt zur Verwendung. Hierdurch können insbesondere im Fall älterer Schiffe die durch die EU-Richtlinien 1999/32/EG und 93/12/EG ab 1.1.2010 geforderten Emissionsgrenzwerte für in einem Hafen der europäischen Gemeinschaft liegende Schiffe erfüllt und somit deren Stromversorgung im Hafen sichergestellt werden, ohne dass größere Umbauten an der Pier oder in den Schiffen erforderlich sind. In den Schiffen selbst müssen nur entsprechende Stromabnahmevorrichtungen vorhanden sein, die aber auch bei einer Stromversorgung von Land (Cold Ironing) vorhanden sein müssen.

Die Hafenstromversorgung umfasst zusätzlich eine Wärmekopplungseinrichtung zur Übertragung von Wärme der Abgase der Verbrennungskraftmaschine an ein Fluid, insbesondere Wasser, und zur Versorgung von Schiffen mit dem erwärmten Fluid. Im Hafen liegende Schiffe werden dann von der schwimmfähigen Hafenstromversorgung zusätzlich mit dem erwärmten Fluid z.B. mit Dampf oder heißem Wasser versorgt. Hierdurch können beispielsweise mit Schweröl betriebene Schiffshilfskessel während der Liegezeit außer Betrieb gesetzt werden. Ein besonderer Vorteil liegt allerdings auch darin, dass durch ein derartiges Wärmekraftkonzept eine höhere Effizienz der Kraftstoffausnutzung als bei einer Stromversorgung von Land erzielt werden kann.

Bevorzugt umfasst die Hafenstromversorgung zusätzlich noch eine Einrichtung zur Reinigung der Abgase der Verbrennungskraftmaschine. Hierdurch können Emissionen (CO₂, NOₓ, CO, PM/Ruß) klein gehalten werden. Entsprechende Technologien (z.B. SCR) stehen bereits zur Verfügung. Alternativ können beispielsweise auch stabile H₂0-Dieselöl-Emulsionen zum Einsatz kommen.

Zusätzlich kann die schwimmfähige Hafenstromversorgung zur Stromerzeugung auch Brennstoffzellen umfassen.
Alternativ oder zusätzlich kann die Hafenstromversorgung zur Stromerzeugung auch Solarzellen umfassen.

Zur Anpassung der Spannung, Frequenz und Phasenlage des von der Hafenstromversorgung erzeugten elektrischen Stromes an die Spannung, Frequenz und Phasenlage des Bordnetzes oder eines anderen Verbrauchers eines im Hafen liegenden Schiffes umfasst die Hafenstromversorgung vorteilhafterweise einen Stromrichter.

Dieser kann eingangsseitig beispielsweise mit einem Stromgenerator verbunden sein und ausgangsseitig mit dem Bordnetz oder dem anderen Verbraucher des im Hafen liegenden Schiffes verbindbar sein.

Der Stromgenerator und der Stromrichter können auch zur Deckung von Strombedarf an Bord der schwimmfähigen Hafenstromversorgung genutzt werden, beispielsweise während der Fahrtund Liegezeiten der schwimmfähigen Hafenstromversorgung, wenn kein Schiff mit Strom versorgt werden muss. Gemäß einer besonders vorteilhaften Ausgestaltung dient der Stromrichter deshalb auch zur Speisung eines elektrischen Antriebsmotors, z.B. eines Ruderpropellers, für den Vortrieb der schwimmfähigen Hafenstromversorgung mit dem erzeugten elektrischen Strom. Der Stromrichter passt dann den von der Hafenstromversorgung erzeugten elektrischen Strom hinsichtlich seiner Spannung und Frequenz an die für den elektrischen Antriebsmotor benötigte Spannung und Frequenz am.

Bei einer Stromversorgung eines Bordnetzes eines Schiffes umfasst die Hafenstromversorgung von Vorteil eine Einrichtung zur Detektion der Spannung, Frequenz und Phasenlage des Bordnetzes des Schiffes. Bei Verwendung eines vorgenannten Stromrichters kann die Einrichtung zur Detektion der Spannung, Frequenz und Phasenlage des Bordnetzes beispielsweise in den Stromrichter integriert sein und die Spannung, Frequenz und Phasenlage des Bordnetzes an den Ausgängen des Stromrichters messen.

Ein nicht beanspruchtes System umfasst zumindest eine Barge mit einem aufgabenunabhängig gestalteten schwimmfähigen (bzw. schwimmbaren) Rumpf und mehrere Funktionsmodulen für unterschiedliche Ver- und/oder Entsorgungsaufgaben, die je nach Ver- und/oder Entsorgungsaufgabe kombinierbar und auf oder in dem schwimmfähigen Rumpf der zumindest einen Barge installierbar ausgebildet sind, wobei die Funktionsmodule zumindest ein Stromerzeugungsmodul zur Stromversorgung von in einem Hafen liegender Schiffe umfassen.

Eine Barge, auf deren Rumpf ein derartiges Stromerzeugungsmodul installiert ist, stellt ebenfalls eine schwimmfähige Hafenstromversorgung mit den vorstehend erläuterten Vorteilen dar. Dabei kann das Stromerzeugungsmodul eine oder mehrere der vorstehend im Zusammenhang mit der schwimmfähigen Hafenstromversorgung genannten Komponenten zur Stromerzeugung, Stromumwandlung, Wärmekopplung, Abgasreinigung und Detektion der Spannung und Frequenz des Bordnetzes umfassen und die daraus erzielbaren Vorteile nutzen. Darüber hinaus sind mit dem erfindungsgemäßen nicht beanspruchten System jedoch noch zahlreiche weitere Vorteile erzielbar.

Hierbei liegt die Überlegung zugrunde, dass es neben dem Strombedarf zusätzlichen erheblichen Versorgungs- und Entsorgungsbedarf für verschiedene Medien für im Hafen liegende Schiffe gibt. Hierzu gehört beispielsweise Grauwasser und Schwarzwasser, evtl. auch Ölschlamm.

Eine derartige Barge kann somit für unterschiedlichen Ver- und/oder Entsorgungsaufgaben genutzt werden.

Ein Funktionsmodul umfasst hierbei alle wesentlichen, für die Erfüllung seiner Funktion (z.B. Stromversorgung, Grauwasserentsorgung, etc.) notwendigen Komponenten.

Bevorzugt sind die Funktionsmodule hinsichtlich ihrer Abmessungen sowie der Art und Anordnung der Anschluss- und Befestigungstechnik an dem schwimmfähigen Rumpf einheitlich und standardisiert.

Bevorzugt weisen die Funktionsmodule Transportcontainerformat auf bzw. sind als Transportcontainer ausgebildet. Für derart ausgebildete Funktionsmodule muss dann in oder auf der Barge nur noch eine betriebssichere Aufstellung (z.B. bezüglich Befestigung, Platz, etc.) gewährleistet werden.

Bevorzugt ist der Rumpf mit den notwendigen Rohrleitungen und Kabelschächten sowie für die Aufnahme derartiger containerisierter Funktionsmodule vorbereitet.

Die Funktionsmodule können zumindest ein Brennstoffmodul (z.B. in Form eines Tanks) zur Versorgung des Stromerzeugungsmoduls mit Brennstoff umfassen.

Zur Aufnahme von Grau- und/oder Schwarzwasser eines Schiffes können die Funktionsmodule außerdem zumindest ein Abwasseraufnahmemodul (z.B. in Form eines Tanks) umfassen.

Zur Reinigung von Grauwasser- oder Schwarzwasserentsorgungseinrichtungen an Bord eines Schiffes können die Funktionsmodule außerdem auch zumindest ein Reinigungsmodul umfassen.

Falls das Frischwasser direkt aus Meer-, See- oder Flusswasser gewonnen werden soll, können die Funktionsmodule auch zumindest ein Frischwassererzeugungsmodul umfassen.

Zur Speicherung und Abgabe von Frischwasser an ein Schiff oder zur Speicherung von Seewasser können die Funktionsmodule auch ein Wasserspeichermodul (z.B. in Form eines Tanks) umfassen.

Weiterhin können die Funktionsmodule zumindest ein Antriebsmodul zum (vorzugsweise elektrischen) Antrieb der Barge und ein Steuerstandsmodul zur Vorgabe der Fahrtrichtung und Geschwindigkeit einer durch ein Antriebsmodul angetriebenen Barge umfassen.

Ein nicht beanspruchtes System kann über die Versorgung und/ oder Entsorgung von in einem Hafen liegender Schiffe hinaus grundsätzlich für die Versorgung und/oder Entsorgung von Schiffen oder anderer Einrichtungen, die auf Reede oder in Küsten- oder Ufernähe liegen oder sich befinden, genutzt werden.

So ist es z.B. denkbar, dass eine Barge als Schubboot mit ein oder zwei Antriebsmodulen und ggf. einem Brennstoffmodul sowie einem Steuerstandsmodul ausgestattet ist und eine Stromversorgungsbarge mit einem Stromerzeugungsmodul und einem Brennstoffmodul (z.B. mit LNG als Brennstoff) zu einem Schiff verbringt, wo diese das Schiff mit dieser wenig umweltbelastendenden Energiequelle mit elektrischer Energie versorgt.

Danach holt die Schubbarge eine Entsorgungsbarge, welche mit Modulen zur Grauwasser- und Schwarzwasser-Entsorgung bzw. -Reinigung ausgerüstet ist und verbringt diese zu dem Schiff. Später wird die Entsorgungsbarge von der Schubbarge von dem Schiff wieder abgeholt. Die Entsorgungsbarge kann dann in eine Brennstoffversorgungsbarge umgerüstet werden und die Abwasseraufnahme- und Reinigungsmodule werden der regelmäßigen Wartung zugeführt. Wenn ein Schlepper zur Verfügung steht, kann die Schubbarge auch in eine reine Stromversorgungsbarge umgerüstet werden, wenn beispielsweise wasserseitig Deicharbeiten anstehen und Pumpen und elektrische Maschinen mit Strom versorgt werden müssen. Gleichzeitig könnten zwei Bargen mit Frischwassererzeugungsmodulen und Frischwasserspeichermodulen für die Verbringung in Länder der dritten Welt vorbereitet werden, wo sie für 2 Jahre die Wasserversorgung der Anrainerstaaten sicherstellen sollen.

Die Systeme bestehen aus einzelnen, aufeinander abgestimmten Modulen mit standardisierten Schnittstellen, welche schnelle und problemlose Umrüstungen ermöglichen. Hierdurch werden günstige und optimierte Services bereitgestellt.

Der grundsätzliche Aufbau einer modularen Barge gliedert sich bevorzugt in
a) die Barge an sich als schiffbaulicher Körper mit einem schwimmfähigen Rumpf und mit mehreren Stellplätzen für standardisierte, insbesondere containerisierte, Funktionsmodule und
b) ein oder mehrere standardisierte, insbesondere containerisierte, Funktionsmodule, die derart ausgebildet sind, dass sie auf den Stellplätzen befestigbar sind.

Die Stellplätze auf der Barge sind hierbei von Vorteil ebenfalls standardisiert, d.h. sie weisen eine standardisierte Höhe, Breite und Tiefe sowie standardisierte Befestigungsmittel auf ihrer Grundfläche und/oder Seitenfläche für die Befestigung der Funktionsmodule auf.

Auch die Funktionsmodule können standardisierte Befestigungsmittel für eine Befestigung eines Funktionsmoduls auf, an oder unter einem anderen Funktionsmodul aufweisen.

Die Intelligenz des Gesamtsystems befindet sich vorteilhafter Weise verteilt in den Containern, welche aufgrund der Modularität ggf. auch ausgetauscht werden können. Die Container können auch verschiedene Funktionsmodule enthalten, diese können nach Bedarf eingesetzt werden, an Land an zentraler Stelle gewartet und auf Einsätze vorbereitet werden. Ggf. können diese Module auch an Land von LKWs oder Zügen aus betrieben werden. Z.B. bietet sich der Einsatz eines Stromerzeugungsmoduls auch im Katastropheneinsatz an, egal ob mit oder ohne Barge. Der große Vorteil liegt dabei in der Flexibilität.

Bevorzugt umfasst die schwimmfähige Hafenstromversorgung einen in Frequenz und Spannung regelbar ausgebildeten Stromrichter, der über eine schaltbare elektrische Leitung mit einem im Hafen liegenden Schiff verbindbar ist. So kann, ohne dass an Bord der schwimmfähigen Hafenstromversorgung eine große Zahl von elektrisch unterschiedlich ausgerüsteten Schiffsanschlüssen vorhanden sein muss, die Übergabe von Strom an ein Schiff jederzeit problemlos gewährleistet werden.

Von Vorteil ist der Stromrichter derart ausgebildet, dass er beliebige Eingangsspannungen und Frequenzen in Spannungen und Frequenzen umwandeln kann, die aktuell im Bordnetz eines im Hafen liegenden Schiffes vorliegen. Auch Bordnetze weisen gewisse Schwankungen in ihrer Spannung und in ihren Frequenzen auf. Bisher war es daher notwendig, dass Spannung und Frequenz an Bord der Spannung und Frequenz der Hafenstromversorgung entsprechen mussten. Das Bordnetz musste daher immer an die Hafenstromversorgungsgrößen angepasst werden. Dies ist nicht der Fall, wenn der Stromrichter in der Lage ist, Differenzen der Spannung und Frequenz dynamisch auszugleichen. Es genügt also eine einfache Einschaltung der Hafenstromversorgung verbunden mit dem Angleichen des Ausgangsteils des Stromrichters an die jeweilige Frequenz, Spannung und Phasenlage des Bordnetzes, um das Schiff im Hafen mit Elektroenergie zu versorgen. Ein Synchronisieren des Bordnetzes auf die Hafenstromversorgung, d.h. Ändern der Bordfrequenz- und - spannung auf die Hafenstromversorgungswerte, ist nicht mehr notwendig, was sehr vorteilhaft ist.

Von besonderem Vorteil ist vorgesehen, dass der Stromrichter eine Steuer- und Regeleinrichtung aufweist, die bei ausgangsseitig geändertem Leistungsbedarf, der sich in einer Tendenz zur Frequenzänderung äußert, die Leistungsabgabe entsprechend anpasst und die Frequenz stabil hält. So kann sehr vorteilhaft erreicht werden, dass nach dem Einschalten der Hafenstromversorgung die Energieerzeuger an Bord des Schiffes entlastet und abgeschaltet werden können, ohne dass Frequenzund Spannungsänderungen im Bordnetz auftreten. Auch das Zuschalten zusätzlicher Verbraucher, z.B. im Rahmen der sogenannten Hotellast und des sogenannten Hilfsbetriebes, beeinflusst Spannung und Frequenz des Bordnetzes nicht. Geführt von der Tendenz der Frequenz hält der Stromrichter Frequenz und Spannung im Bordnetz stabil, ohne dass die Mannschaft des Schiffes nach dem Einschalten des Stromrichters eingreifen muss.

Es ist dabei vorgesehen, dass der Stromrichter Steuer- und Regelkomponenten aufweist, insbesondere softwarebasierte Komponenten, die auf einen Spannungsabfall oder eine Spannungserhöhung im Bordnetz, z.B. durch Zuschalten oder Abschalten von Generatoren oder Verbrauchern, durch eine Frequenzerhöhung oder -erniedrigung reagieren. So kann der Stromrichter der Hafenstromversorgung seine vorteilhafte Wirkung für das Bordnetz entfalten.

Vorteilhaft ist es weiterhin, wenn der Landanschluss-Stromrichter eine Regeleinrichtung aufweist, die einen Vier-Quadranten-Betrieb ermöglicht. So ist ein besonders günstiger Betrieb der Hafenstromversorgung möglich.

Für den Stromrichter können die unterschiedlichsten Typen verwendet werden. Besonders vorteilhaft ist ein PWM-Stromrichter, auf dessen einer Seite der von der Hafenstromversorgung erzeugte Strom mit seiner Spannung und Frequenz aufgegeben werden kann und dessen andere Seite dann den Bordstrom für das im Hafen liegende Schiff mit der notwendigen Spannung und Frequenz liefert.

Weiterhin sehr vorteilhaft ist ein Stromrichter in Zwischenkreistechnik, insbesondere, wenn er einen Statikbestandteil in der Regelung aufweist. Hierfür sind intern zwei unabhängig voneinander gesteuerte und geregelte Teile vorhanden, zwischen denen Elektroenergie übergeben wird.

Die Erfindung sowie weitere vorteilhafte Ausgestaltungen der Erfindung gemäß Merkmalen der Unteransprüche werden im folgenden anhand von Ausführungsbeispielen in einigen der Figuren näher erläutert; darin zeigen:
- FIG 1: einen Längsschnitt einer schwimmfähigen Hafenstromversorgung,
- FIG 2: eine prinzipielle Darstellung eines modularen, nicht beanspruchten Systems zur Versorgung und/oder Entsorgung von in einem Hafen liegender Schiffe,
- FIG 3: den grundsätzlichen Aufbau einer mit Hilfe des in FIG 2 gezeigten Systems zusammengestellten Modularen Service Barge,
- FIG 4: eine erste Konfiguration einer Modularen Service Barge als eine schwimmfähige Hafenstromversorgung,
- FIG 5: eine zweite Konfiguration einer Modularen Service Barge als eine schwimmfähige Hafenstromversorgung,
- FIG 6: eine Konfiguration einer Modularen Service Barge als ein Schubboot bzw. Schlepper,
- FIG 7: eine Konfiguration einer Modularen Service Barge als ein Frischwassererzeuger,
- FIG 8: eine Konfiguration einer Modularen Service Barge als ein Grau- und Schwarzwasserentsorger,
- FIG 9: eine schwimmfähige Hafenstromversorgung mit ihren wesentlichen elektrischen Komponenten an Bord,
- FIG 10: einen besonders vorteilhafte Ausgestaltung des Stromrichters von FIG 9.

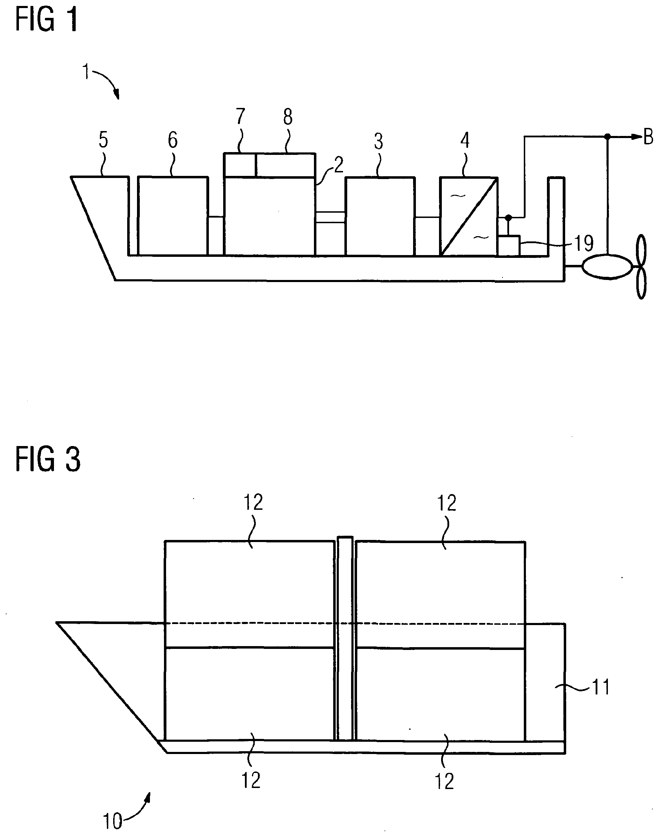

FIG 1 zeigt in einem Längsschnitt eine schwimmfähige Hafenstromversorgung 1 mit einer Verbrennungskraftmaschine 2, einem von der Verbrennungskraftmaschine 2 angetriebenen Generator 3 und einem Umrichter 4 zur Anpassung der Spannung und Frequenz des von dem Generator 3 erzeugten Stromes an die Spannung und Frequenz des Bordnetzes B eines im Hafen liegenden Schiffes. Diese Komponenten sind in oder auf einer schwimmfähigen Einrichtung 5, insbesondere einer Barge, angeordnet. Zur Hafenstromversorgung gehören ferner ein Tank 6 für die Speicherung von Brennstoff- oder Kraftstoff für die Verbrennungskraftmaschine 2, eine Abgasbehandlungseinrichtung 7 zur Reinigung der Abgase der Verbrennungskraftmaschine 2, eine Wärmekopplungseinrichtung 8 zur Übertragung von Wärme der Abgase der Verbrennungskraftmaschine 2 an Wasser und zur Versorgung von Schiffen mit Dampf oder heißem Wasser und eine Einrichtung 19 zur Detektion der Spannung, Frequenz und Phasenlage des Bordnetzes B eines Schiffes. Der Vortrieb der schwimmfähigen Hafenstromversorgung 1 kann beispielsweise mit Hilfe eines Ruderpropellers 23 erfolgen, der ebenfalls über den Umrichter 4 von dem Generator 3 mit Strom versorgt werden kann.

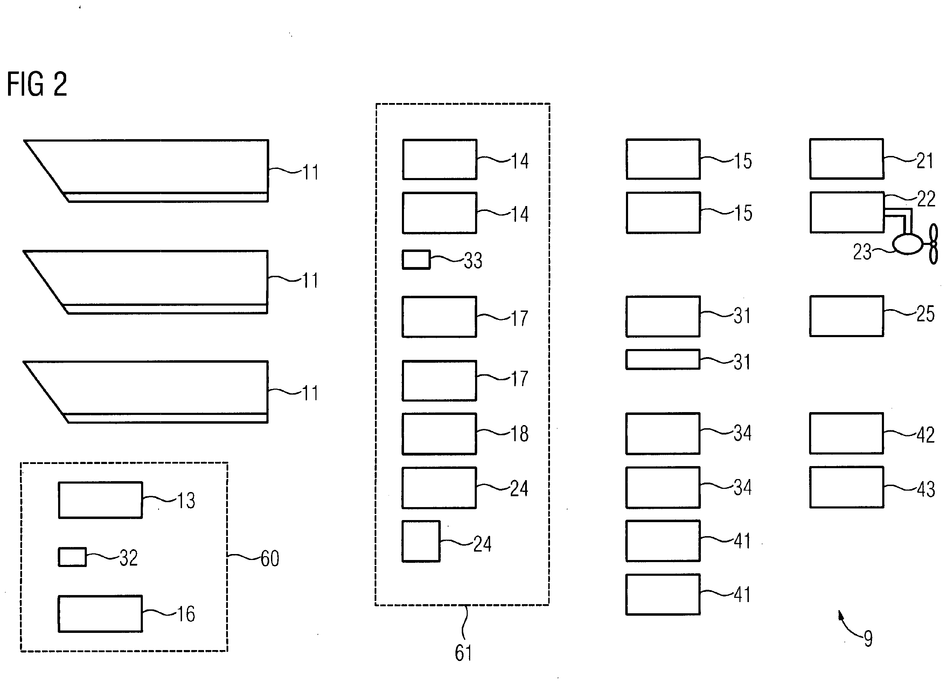

FIG 2 zeigt eine prinzipielle Darstellung eines Systems 9 zur Versorgung und/oder Entsorgung von in einem Hafen liegender Schiffe mit mehreren Bargen 11 mit jeweils einem aufgabenunabhängig gestalteten schwimmfähigen Rumpf und mit mehreren Funktionsmodulen für unterschiedliche Ver- und Entsorgungsaufgaben, die je nach Ver- und/oder Entsorgungsaufgabe kombinierbar und auf dem schwimmenden Rumpf der Bargen 11 installierbar ausgebildet sind.

Die Funktionsmodule umfassen dabei eine Gruppe 60 von Stromerzeugungsmodulen, die im Detail ein Generatormodul 13 mit einem Dieselgenerator und ein Brennstoffzellenmodul 16 zur Erzeugung von Strom für ein Schiff und ein Generatormodul 32 mit einem Dieselgenerator zur Erzeugung von Strom für ein Frischwassererzeugungsmodul 31 umfassen. Das Generatormodul 13 umfasst hierbei von Vorteil auch eine bereits vorstehend beschriebene Wärmekopplungseinrichtung.

Die Funktionsmodule umfassen weiterhin eine Gruppe 61 von Brennstoffmodulen, die im Detail zwei Brennstoffmodule 14 zur Speicherung von Brennstoff (z.B. LNG, LPG oder Dieselkraftstoff) für die Generatormodule 13 sowie zwei Wasserstoffspeichermodule 17 und ein Sauerstoffspeichermodul 18 für das Brennstoffzellenmodul 16 umfassen. Weiterhin umfasst die Gruppe 61 von Brennstoffmodulen zwei Brennstoffmodule 24 zur Speicherung von Brennstoff für ein Antriebsmodul 22 und ein Brennstoffmodul 33 zur Speicherung von Brennstoff für das Generatormodul 32.

Außerdem umfassen die Funktionsmodule
- mehrere Grauwasseraufnahmemodule 15 zu Aufnahme von Grauwasser eines Schiffes,
- mehrere Frischwassererzeugungsmodule 31,
- mehrere Wasserspeichermodule 34 zur Speicherung von Frischwasser und/oder Seewasser,
- mehrere Schwarzwasseraufnahmemodule 41 zu Aufnahme von Schwarzwasser eines Schiffes,
- ein Antriebsmodul 22 mit einem Ruderpropeller 23 zum Antrieb einer Barge 11,
- ein Steuerstandmodul 21 zur Vorgabe der Fahrtrichtung und Geschwindigkeit einer durch ein Antriebsmodul 22 angetriebenen Barge 11,
- ein Sludge-Aufnahme-Modul 25,
- ein Reinigungsmodul 42 zur Reinigung von Grauwasser- oder Schwarzwasserentsorgungseinrichtungen an Bord eines Schiffes,
- ein Müllsammelmodul 43 zum Sammeln von Müll von Schiffen und dessen Abgabe bei einer Recyclingstation.

Das System kann dabei nicht nur zur Versorgung und/oder Entsorgung von in einem Hafen liegender Schiffe, sondern darüber hinaus grundsätzlich zur Versorgung und/oder Entsorgung für auf Reede oder in Ufer- oder Küstennähe liegender Schiffe und anderer Einrichtungen genutzt werden.

FIG 3 zeigt in einem Längsschnitt den grundsätzlichen Aufbau einer mit Hilfe des in FIG 2 gezeigten Systems 9 zusammengestellten Modularen Service Barge 10. Die Modulare Service Barge 10 besteht aus der eigentlichen Barge 11, d.h. einem schwimmfähigen schiffbaulichen Körper mit Stellplätzen für standardisierte, insbesondere containerisierte, Funktionsmodule 12 und einem oder mehreren derartiger standardisierter, insbesondere containerisierter, Funktionsmodule 12.

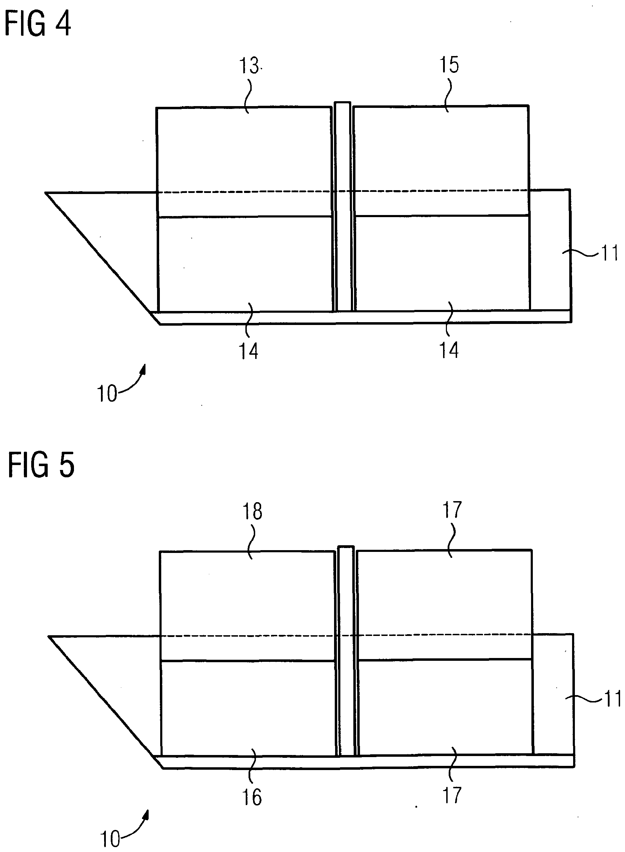

FIG 4 zeigt eine Konfiguration einer Modularen Service Barge 10 als eine schwimmfähige Hafenstromversorgung mit Kapazität zur Aufnahme von Grauwasser von einem im Hafen liegenden Schiff zur späteren Klärung an Land. Die Service Barge 10 umfasst hierzu ein Generatormodul 13, zwei Brennstoffmodule 14 zur Speicherung von Brennstoff (z.B. LNG, LPG, Dieselkraftstoff) für das Generatormodul 13 und ein Grauwasseraufnahmemodul 15.

FIG 5 zeigt eine Konfiguration einer Modularen Service Barge 10 als eine schwimmfähige Hafenstromversorgung mit Brennstoffzellen. Die Service Barge 10 umfasst hierzu ein Brennstoffzellenmodul 16 zur Stromerzeugung, zwei Wasserstoffspeichermodule 17 zur Speicherung von Wasserstoff und ein Sauerstoffspeichermodul 18 zur Speicherung von Sauerstoff.

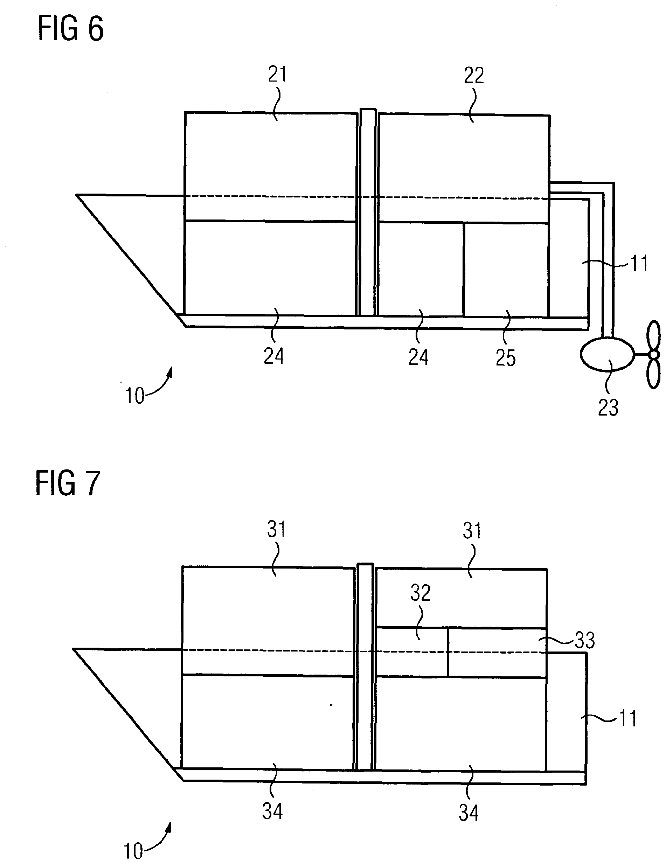

FIG 6 zeigt eine Konfiguration einer Modularen Service Barge 10 als ein Schubboot bzw. Schlepper. Die Service Barge 10 umfasst hierzu ein Steuerstandmodul 21, ein Antriebsmodul 22 zum Antrieb der Barge 10, z.B. mittels eines Ruderpropellers 23, zwei Brennstoffmodule 24 zur Speicherung von Brennstoff für das Antriebsmoduls 22 und ein Sludge-Modul 25. Auf diese Weise kann bei Bedarf eine Service Barge als Schlepper umkonfiguriert werden und andere Service Bargen im Hafen zu den verschiedenen Zielen verbringen.

FIG 7 zeigt eine Konfiguration einer Modularen Service Barge 10 als Frischwassererzeuger mit zwei Frischwassererzeugungsmodulen (Seewasserentsalzungsmodulen) 31, einem Generatormodul 32 zur Stromerzeugung für das Frischwassererzeugungsmodul 31, einem Brennstoffmodul 33 zur Speicherung von Brennstoff für das Generatormodul 32 und zwei Wasserspeichermodulen 34 zur Speicherung von erzeugtem Frischwasser. Der Einsatz einer derartigen Barge als Frischwassererzeuger kann zum Beispiel an trinkwasserarmen Küsten (z.B. Rotes Meer, Persischer Golf usw.) erfolgen. Die Barge kann in sauberes Seewasser gezogen werden und Frischwasser generieren und dieses an entsprechend ausgerüstete Tankschiffe (oder Tankbargen im Schleppverband) im Tausch gegen Brennstoff abgeben oder jeweils in den Hafen zurückgeschleppt werden, wenn die Barge das Signal "Voll" sendet, und dort das Wasser z.B. an im Hafen liegende Schiffe abgeben.

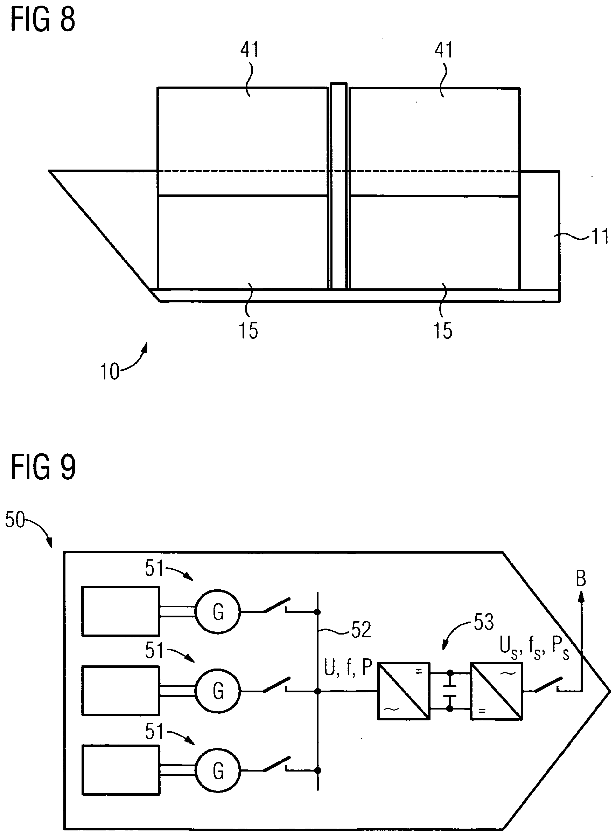

FIG 8 zeigt eine Konfiguration einer Modularen Service Barge 10 als Grau- und Schwarzwasserentsorger mit zwei Schwarzwasseraufnahmenmodulen 41 und zwei Grauwasseraufnahmemodulen 15. Die Barge nimmt Grau- und Schwarzwasser von einen im Hafen liegenden Schiff zu späteren Klärung an Land auf. Ebenso ist eine Konfiguration zur Sludge-Übernahme mit Hilfe spezieller Module denkbar.

FIG 9 zeigt eine schwimmfähige Hafenstromversorgung 50 mit ihren wesentlichen elektrischen Komponenten an Bord. Im Fall der in FIG 4 gezeigten Modularen Service Barge würden sich diese Komponenten in einem oder mehreren Generatormodulen 13 befinden. In der schwimmfähigen Hafenstromversorgung 50 sind ein oder mehrere Dieselgeneratorsätze 51 vorhanden, die einzeln oder im Verbund Strom in ein elektrisches Netz 52 einspeisen (im Fall der in FIG 9 gezeigten schwimmfähigen Hafenstromversorgung 50 sind beispielsweise drei Dieselgeneratorsätze 51 vorhanden). Der Strom in dem elektrischen Netz 52 weist eine dem elektrischen Netz eigene Spannung U, Frequenz f und Phasenlage P auf. In einem im Hafen liegenden Schiff wird für das Bordnetz B oder einen elektrischen Verbraucher allerdings ein Strom mit einer Spannung Uₛ, Frequenz fₛ und Phasenlage Pₛ benötigt. Ein Stromrichter 53, der eingangsseitig mit dem elektrischen Netz 52 und ausgangseitig mit dem Bordnetz B oder dem Verbraucher des Schiffes verbunden ist, wandelt deshalb den Strom mit der Spannung U, Frequenz f und Phasenlage P des elektrischen Netzes 52 in einen Strom mit der Spannung Uₛ, Frequenz fₛ und Phasenlage Pₛ des Bordnetzes B oder Verbrauchers des Schiffes um.

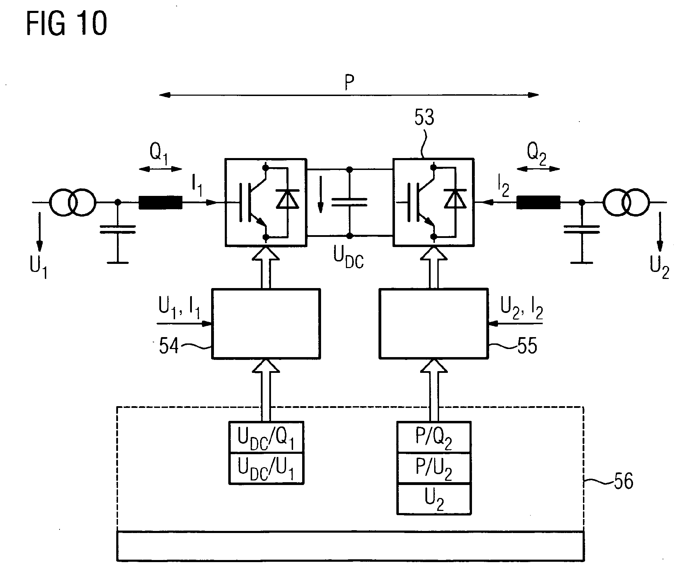

FIG 10 zeigt einen besonders geeigneten Stromrichter 53, an dessen Eingangsseite die Spannung U1 anliegt, während auf der anderen Seite die Spannung U2 gegeben ist. Der Stromrichter, der in herkömmlicher Weise dargestellt ist, weist einen Zwischenkreis auf, wobei beide Teile des Stromrichters einen unabhängigen Regler aufweisen. So können die Spannungen und Ströme für die schematisch dargestellten Leistungshalbleiter wie benötigt eingestellt werden. Der Stromrichter ist mit 53 bezeichnet, während die Stromrichterregler mit 54 und 55 bezeichnet sind. Falls notwendig, weist der Stromrichter auch noch eine weitere Regelungsmöglichkeit auf, die ggf. eine Statik/Reglerkennlinie enthält. Diese zusätzliche Stromrichterregelung ist mit 56 bezeichnet. Sie kann eine Blindleistungskompensation durchführen. Wie bereits ausgeführt, ist es dem Stromrichterfachmann bekannt, wie derartige Stromrichter technisch ausgeführt werden kann. Der Stromrichter mit bekannter Steuerung und Regelung wird durch Einstellung seiner Steuerung und Regelung so eingerichtet, dass er eingangsseitig den Ausgangsstrom des Generators oder Generatorverbundes, wie er in dem elektrischen Netz 52 vorliegt, verarbeiten kann und ausgangsseitig stabil einen dem Bordnetzzustand eines im Hafen liegenden Schiffes entsprechenden Strom in Bezug auf Spannung, Frequenz und Phasenlage erzeugt.

## Patentansprüche

1. Verfahren zur Versorgung eines in einem Hafen liegenden Schiffes mit externer Energie durch eine schwimmfähige Hafenstromversorgung (1) für Schiffe, wobei die schwimmfähige Hafenstromversorgung (1) eine Verbrennungskraftmaschine (2), einen von der Verbrennungskraftmaschine (2) angetriebenen Generator (3) zur Stromerzeugung für das Schiff und eine Wärmekopplungseinrichtung (8) zur Übertragung von Wärme der Abgase der Verbrennungskraftmaschine an ein Fluid, insbesondere Wasser, und zur Versorgung von Schiffen mit dem erwärmten Fluid umfasst, wobei der Generator (3) für das Schiff Strom erzeugt, wobei die Wärmekopplungseinrichtung (8) Wärme der Abgase der Verbrennungskraftmaschine an das Fluid überträgt, und wobei das Schiff mit dem erwärmten Fluid versorgt wird.

2. Verfahren nach Anspruch 1, wobei die schwimmfähige Hafenstromversorgung (1) eine Barge (11) ist, auf oder in der sämtliche Komponenten einer Hafenstromversorgung für Schiffe angeordnet sind.

3. Verfahren nach Anspruch 1 oder 2, wobei die schwimmfähige Hafenstromversorgung (1) eine Einrichtung (7) zur Reinigung der Abgase der Verbrennungskraftmaschine (2) umfasst, wobei die Einrichtung (7) die Abgase der Verbrennungskraftmaschine (2) reinigt.

4. Verfahren nach einem der vorhergehenden Ansprüche, wobei die schwimmfähige Hafenstromversorgung (1) Brennstoffzellen und/oder Solarzellen zur Stromerzeugung für die Schiffe umfasst.

5. Verfahren nach einem der vorhergehenden Ansprüche, wobei die schwimmfähige Hafenstromversorgung (1) einen Stromrichter (4) umfasst, welcher Spannung, Frequenz und Phasenlage des erzeugten Stromes an die Spannung, Frequenz und Phasenlage eines Bordnetzes (B) oder eines Verbrauchers des Schiffes anpaßt.

6. Verfahren nach Anspruch 5, wobei der Stromrichter (4) zusätzlich auch zur Speisung eines elektrischen Antriebsmotors zum Vortrieb der Hafenstromversorgung (1) mit dem erzeugten elektrischen Strom dient.

7. Verfahren nach einem der vorhergehenden Ansprüche, wobei die schwimmfähige Hafenstromversorgung (1) eine Einrichtung (19) zur Detektion der Spannung, Frequenz und Phasenlage des Bordnetzes (B) des Schiffes umfasst und die Einrichtung (19) die Spannung, Frequenz und Phasenlage des Bordnetzes (B) des Schiffes detektiert.

## Claims

1. Method for supplying external power to a ship lying in a harbour by means of a floating harbour power supply (1) for ships, wherein the floating harbour power supply (1) comprises an internal combustion engine (2), a generator (3) driven by the internal combustion engine (2) for producing power for the ship and a heat coupling device (8) for transmitting heat from the exhaust gases of the internal combustion engine to a fluid, in particular water, and for supplying ships with the heated fluid, wherein the generator (3) produces power for the ship, wherein the heat coupling device (8) transmits heat from the exhaust gases of the internal combustion engine to the fluid, and wherein the ship is supplied with the heated fluid.

2. Method according to Claim 1, wherein the floating harbour power supply (1) is a barge (11) on or in which all of the components of a harbour power supply for ships are arranged.

3. Method according to Claim 1 or 2, wherein the floating harbour power supply (1) comprises a device (7) for cleaning the exhaust gases of the internal combustion engine (2), wherein the device (7) cleans the exhaust gases of the internal combustion engine (2).

4. Method according to one of the preceding claims, wherein the floating harbour power supply (1) comprises fuel cells and/or solar cells for producing power for the ships.

5. Method according to one of the preceding claims, wherein the floating harbour power supply (1) comprises a converter (4) that matches voltage, frequency and phase of the power produced to the voltage, frequency and phase of a ship electrical system (B) or a load of the ship.

6. Method according to Claim 5, wherein the converter (4) is additionally also used for feeding the electric power produced to an electric drive motor for propelling the harbour power supply (1).

7. Method according to one of the preceding claims, wherein the floating harbour power supply (1) comprises a device (19) for detecting the voltage, frequency and phase of the ship electrical system (B) of the ship, and the device (19) detects the voltage, frequency and phase of the ship electrical system (B) of the ship.

## Revendications

1. Procédé d'alimentation d'un bateau au port en énergie extérieure par une alimentation (1) flottante en courant électrique de port pour des bateaux, l'alimentation (1) flottante en courant électrique de port comprenant une machine (2) à combustion interne, une génératrice (3) entraînée par la machine (2) à combustion interne pour produire du courant pour le bateau et un dispositif (8) de couplage de chaleur pour la transmission de chaleur des gaz d'échappement de la machine à combustion interne à un fluide, notamment à de l'eau, et pour l'alimentation de bateaux en le fluide réchauffé, la génératrice (3) produisant du courant pour le bateau, le dispositif (8) de couplage de chaleur transmettant au fluide de la chaleur des gaz d'échappement de la machine à combustion interne et le bateau étant alimenté en le fluide chauffé.

2. Procédé suivant la revendication 1, dans lequel l'alimentation (1) flottante en courant électrique de port est une barge (11) sur ou dans laquelle sont placés tous les éléments d'une alimentation en courant électrique de port pour des bateaux.

3. Procédé suivant la revendication 1 ou 2, dans lequel l'alimentation (1) flottante en courant électrique de port comprend un dispositif (7) d'épuration des gaz d'échappement de la machine (2) à combustion interne, le dispositif (7) épurant les gaz d'échappement de la machine (2) à combustion interne.

4. Procédé suivant l'une des revendications précédentes, dans lequel l'alimentation (1) flottante en courant électrique de port comprend des piles à combustible et/ou des piles solaires de production de courant pour les bateaux.

5. Procédé suivant l'une des revendications précédentes, dans lequel l'alimentation (1) flottante en courant électrique de port comprend un convertisseur (4) de courant pour l'adaptation de la tension, de la fréquence et de la position en phase du courant produit à la tension, à la fréquence et à la position en phase d'un réseau (B) de bord ou d'un appareil consommateur du bateau.

6. Procédé suivant la revendication 5, dans lequel le convertisseur (4) de courant sert, en outre, à l'alimentation d'un moteur d'entraînement électrique pour l'entraînement de l'alimentation (1) en courant électrique de port par le courant électrique produit.

7. Procédé suivant l'une des revendications précédentes, dans lequel l'alimentation (1) flottante en courant électrique de port comprend un dispositif (19) de détection de la tension, de la fréquence et de la position en phase du réseau (B) de bord du bateau et le dispositif (19) détecte la tension, la fréquence et la position en phase du réseau (B) de bord du bateau.
